# EUROPÄISCHE PATENTSCHRIFT

(11) **EP 4 680 930 B1**
(45) Veröffentlichungstag und Bekanntmachung des Hinweises auf die Patenterteilung: **21.10.2026**
(21) Anmeldenummer: 24710417.7
(22) Anmeldetag: 12.03.2024
(51) Int. Cl.: G01N 1/22, G01N 1/20

(54) **GASENTNAHMEVORRICHTUNG UND GASANALYSEVORRICHTUNG ZUR ENTNAHME EINES HEISSEN, STAUBBELADENEN GASES AUS EINER ABGASLEITUNG EINER METALLURGISCHEN ANLAGE**
GAS SAMPLING DEVICE AND GAS ANALYSER FOR SAMPLING A HOT, DUST-LADEN GAS FROM AN EXHAUST LINE OF A METALLURGICAL INSTALLATION
DISPOSITIF DE PRÉLÈVEMENT DE GAZ ET DISPOSITIF D'ANALYSE DE GAZ POUR PRÉLEVER UN GAZ CHAUD CHARGÉ DE POUSSIÈRE D'UNE LIGNE D'ÉCHAPPEMENT D'UNE INSTALLATION MÉTALLURGIQUE

(30) Priorität: 13.03.2023 EP 23161521
(43) Veröffentlichungstag der Anmeldung: 21.01.2026
(73) Patentinhaber: Primetals Technologies Austria GmbH, 4031 Linz (AT)
(72) Erfinder: TRATNIG, Mark, 9173 St. Margareten i.R. (AT); REISCHL, Christoph, 4162 Julbach (AT); ROHRHOFER, Andreas, 4070 Fraham (AT); WOHLFART, Klaus, 4075 Fraham (AT)
(74) Vertreter: Metals@Linz
(86) Internationale Anmeldenummer: PCT/EP2024/056550
(87) Internationale Veröffentlichungsnummer: WO 2024/189024

(56) Entgegenhaltungen:
- EP-A1- 3 809 111
- WO-A1-2021/143987
- CN-A- 115 201 427

## Beschreibung

### Bezeichnung der Erfindung

Gasentnahmevorrichtung und Gasanalysevorrichtung zur Entnahme eines heißen, staubbeladenen Gases aus einer Abgasleitung einer metallurgischen Anlage.

### Gebiet der Technik

Die vorliegende Erfindung betrifft das Gebiet der Gasentnahme von staubbeladenem Gas bei metallurgischen Anlagen und dessen Aufbereitung zur Gasanalyse.

Einerseits betrifft die Erfindung eine Gasentnahmevorrichtung zur Entnahme eines heißen, staubbeladenen Gases aus einer Abgasleitung einer metallurgischen Anlage, insbesondere eines Sauerstoffaufblaskonverters oder eines Elektrolichtbogenofens. Das heiße, staubbeladene Gas weist ferromagnetisches Partikelmaterials auf. Ein Entnahmerohr wird derart in der Abgasleitung angeordnet, dass ein Teilstrom des Gases entnommen wird, wobei dem Entnahmerohr
- eine Kühlstrecke, zur Kühlung des ferromagnetischen Partikelmaterials auf eine Temperatur von unter 750 °C,
- eine Gasreinigungsstrecke,
- eine Analysestrecke,
- eine Gasfördereinheit und
- ein Rückführrohr nachgeordnet sind.

Anderseits betrifft die Erfindung eine Gasanalysevorrichtung umfassend die Gasentnahmevorrichtung.

### Stand der Technik

Nachfolgend wird eine Gasentnahmevorrichtung zur Entnahme eines heißen staubbeladenen Gases aus einer Abgasleitung und/oder einer Abgasbehandlungseinheit einer metallurgischen Anlage beschrieben. Die metallurgische Anlage ist insbesondere ein Sauerstoffaufblaskonverter oder ein Elektrolichtbogenofen, wobei das heiße staubbeladene Gas ferromagnetisches Partikelmaterial aufweist. Dabei treten am Ort der Gasentnahmevorrichtung Abgastemperaturen von 200°C - 1000 °C sowie Partikelbeladungen von typischerweise bis zu 100 g/m³ auf, wobei diese Angabe auf 0 °C und 1 bar bezogen ist.

In Stahlwerken werden häufig Abgasanalysen herangezogen, um metallurgische Prozesse zu analysieren bzw. zu regeln. Damit kann z.B. der Verbrauch von Einsatzstoffen optimiert werden, die Lebensdauer von Anlagenkomponenten verlängert werden, die Produktionszeit verkürzt werden oder die energetische Verwertung von Prozessgasen oder Abgasen maximiert werden.

Einerseits kommen zur Analyse der Abgaszusammensetzung sogenannte extraktive Messverfahren zur Anwendung. Hierbei wird der Abgasleitung Gas entnommen, gereinigt, getrocknet und anschließend einem Gasanalysator zugeführt. Typische Totzeiten einer solchen Analyse betragen 15 - 30 Sekunden. Eine Totzeit dieser Größenordnung wirkt sich auf die Dynamik eines oben beschriebenen Regelkreises nachteilig aus. Darüber hinaus sinkt mit der Länge dieser Totzeit die Anlagensicherheit, da explosive Gasmischungen erst später erkannt werden und somit auch erst später, beispielsweise durch Umschalten von Gasventilen, darauf reagiert werden kann.

Andererseits kommen zur Analyse der Abgaszusammensetzung sogenannte in-situ Messverfahren zur Anwendung. Hierbei wird die Gaszusammensetzung mit optischen Verfahren, beispielsweise laseroptischen Verfahren, direkt in der Gasleitung bestimmt. Die Zuverlässigkeit der Messung hängt stark von der Staubbeladung des Abgasstromes ab. Bei zu starker Staubbeladung tritt starkes Messrauschen bis hin zum zeitweiligen Ausfall der Messung auf. Dies führt ebenfalls zu unbefriedigendem Regelverhalten bis hin zu einer Gefährdung der Anlagensicherheit. Darüber hinaus verbrauchen derartige Systeme hohe Mengen an Spülgas und verursachen hohen Wartungsaufwand.

Außerdem werden Systeme zur Gasanalyse beschrieben, die Merkmale beider oben genannter Messprinzipien aufweisen. In EP3809111A1 ist z.B. ein Entnahmerohr derart in der Abgasleitung angeordnet, dass ein Teilstrom des Gases entnommen wird. Dem Entnahmerohr sind eine Kühlstrecke zur Kühlung des Gases bzw. des beinhalteten Partikelmaterials, eine Gasreinigungsstrecke, eine Analysestrecke, eine Gasfördereinheit und ein Rückführrohr nachgeordnet. Nachteilig ist, dass ein System dieser Art aufgrund des eingesetzten Filters erheblichen Wartungsaufwand verursacht. Darüber hinaus tritt eine unerwünschte Totzeit auf, die auf das zu durchströmende Volumen der Gasentnahmevorrichtung, inklusive Filter und anderer Komponenten zur Gasaufbereitung, zurückzuführen ist.

### Zusammenfassung der Erfindung

Die Aufgabe dieser Erfindung ist es, eine Vorrichtung zu schaffen, die es erlaubt, aus einem heißen staubbeladenen Abgas eine Teilmenge zu entnehme und derart aufzubereiten, dass die Gaszusammensetzung des Abgases mit geringer Zeitverzögerung, geringer Messunsicherheit und hoher Ausfallsicherheit gemessen werden kann.

Diese Aufgabe wird dadurch gelöst, dass die Gasreinigungstrecke eine magnetische Partikelabscheidung aufweist, welche durch einen Flachkanal gebildet wird, der einen rechteckigen Querschnitt mit einem Höhen- zu Breitenverhältnis von kleiner als 1:5, bevorzugt kleiner als 1:10 aufweist, wobei bevorzugt zumindest außen an den Breitseiten des Flachkanals Magnete angeordnet sind. Der Flachkanal ermöglicht eine besonders gute Anhaftung der abzuscheidenden Partikel, da einerseits für das Magnetfeld nur eine geringe Eindringtiefe benötigt wird und andererseits in seinem Inneren eine große Oberfläche für die Partikelabscheidung zur Verfügung steht. Weiters bewirkt die verhältnismäßig große Oberfläche des Flachkanals eine besonders effektive Kühlung des Messgases. Bevorzugt befinden sich auf der Außenseite des Flachkanals Elektromagnete und/oder Permanentmagnete, deren Magnetfeld derart in/auf den Flachkanal wirkt, dass dort vorhandener ferromagnetischer Staub und teilweise an diesem ferromagnetischen Staub anhaftender nicht-ferromagnetischer Staub durch Magnetkräfte an der Innenseite des Flachkanals gehalten wird.

Die Gasreinigungstrecke weist eine magnetische Partikelabscheidung auf, welcher derart ausgelegt ist, dass ferromagnetisches Partikelmaterial mit einer Größe von über 0,15 µm zumindest zu 30%, bevorzugt zu 50%, besonders bevorzugt zu 70%, ganz besonders bevorzugt zu 80% aus dem Teilstrom des Gases abgeschieden wird.

Die Erfahrung hat gezeigt, dass eine Abscheidung dieses Partikelmaterials ausreicht, um mit bekannten optischen Gasanalysatoren zuverlässige Ergebnisse zu erzielen.

Die magnetische Kraft auf ein ferromagnetisches Partikel in einem Magnetfeld kann mit ${F}_{m} = \left({μ}_{r 1}-1\right) ⋅ {μ}_{0} ⋅ {V}_{p} ⋅ H ⋅ grad \left(\vec{H}\right)$ (Gleichung 1) analytisch abgeschätzt werden, wobei *H* das magnetische Feld, *Vₚ* das Volumen des Partikels, *µ*₀ die magnetische Permeabilität von Vakuum, sowie *µᵣ₁* die relative Permeabilität des Partikelmaterials sind.

Das Magnetfeld muss in seiner Stärke und Ausprägung so eingestellt werden, dass die partikelbezogenen Magnetkräfte die Strömungskräfte und Gewichtskräfte derart überwiegen, dass das ferromagnetische Partikelmaterial in der oben beschrieben Weise abgeschieden wird.

Damit das ferromagnetische Partikelmaterial magnetisch abgeschieden werden kann, ist dessen Abkühlung unterhalb der Curie Temperatur erforderlich. Dies erfolgt in einer Kühlstrecke.

Die Kühlstrecke wird aus dem Entnahmerohr gebildet, das entweder durch ein Medium wie Wasser, Gas, oder ein anderes Kühlmedium umströmt wird, oder Wärme durch andere Mechanismen wie natürliche Konvektion an die Umgebung abgibt. Der Gasdurchfluss durch dieses Gasentnahmerohr muss so eingestellt werden, dass sich die im Gas befindlichen ferromagnetischen Partikel unter ihre Curie Temperatur abkühlen können bevor sie den Magnetabscheider erreichen.

In einer vorteilhaften Ausführungsform beträgt das Volumen der Gasentnahmevorrichtung von einschließlich einem Entnahmerohr bis zu einschließlich einem optischen Gasanalysegerät weniger als 0,3 m³, bevorzugt weniger als 0,15 m³, besonders bevorzugt weniger als 0,05 m³.

In einer weiteren vorteilhaften Ausführungsform beinhaltet die Gasreinigungsstrecke zumindest eine Leitschaufel, die so angeordnet ist, dass das staubbeladene Gas in Richtung der magnetischen Partikelabscheidung gelenkt wird. Prallen größere Partikel gegen diese Leitschaufel, so werden diese abgebremst und können mit größerer Wahrscheinlichkeit von der magnetischen Partikelabscheidung erfasst werden. Die Strömungsführung wird dadurch so beeinflusst, dass das staubbeladene Gas näher an eine magnetische Wand der Gasreingungsstrecke geführt wird und somit eine effektivere Abscheidung der Staubpartikel erfolgt.

In einer weiteren vorteilhaften Ausführungsform weist die Gasreinigungsstrecke an jenen Wandbereichen, an denen die magnetischen Partikelabscheidung angeordnet ist, zumindest teilweise nicht-ferromagnetisches Material und bevorzugt eine geringere Wandstärke auf als an den restlichen Wandbereichen.

Dadurch werden magnetische Kurzschlüsse vermieden, was zu einer höheren magnetischen Feldstärke in Inneren der magnetischen Partikelabscheidung und damit zu einer verbesserten Partikelabscheidung führt.

In einer weiteren vorteilhaften Ausführungsform sind zwischen einer Wand der Gasreinigungsstrecke und der magnetischen Partikelabscheidung Eisenkernverlängerungen, welche aus ferromagnetischem Material bestehen, angeordnet, die das Magnetfeld an die Gasreinigungsstrecke heranführen. Die Eisenkernverlängerungen können beispielsweise in die Wand der Gasreinigungsstrecke eingesetzt sein. Dadurch kann der Abstand zwischen Magneten und Gasreinigungsstrecke magnetisch überbrückt werden und/oder das Magnetfeld im Bereich der Gasreinigungsstrecke in seiner Form und Stärke beeinflusst werden. Dadurch kann die magnetische Feldstärke in verschiedenen Bereichen der Gasreinigungsstrecke unterschiedlich beeinflusst werden und somit die Form des Magnetfeldes in der Gasreinigungsstrecke entsprechen Gleichung 1 derart optimiert werden, dass eine möglichst gründliche magnetische Partikelabscheidung erfolgt.

In einer weiteren vorteilhaften Ausführungsform weisen die Eisenkernverlängerungen der magnetischen Partikelabscheidung der Gasreinigungsstrecke eine Kühleinrichtung, bevorzugt eine Luftkühlung oder Wasserkühlung auf.

Dadurch wird trotz hoher Temperatur der Gasreinigungsstrecke eine verbesserte magnetische Leitfähigkeit der magnetischen Kerne erreicht. Das führt zu einer höheren magnetischen Feldstärke im Inneren der Gasreinigungsstrecke und damit zu einer verbesserten Partikelabscheidung.

In einer weiteren vorteilhaften Ausführungsform befinden sich auf zumindest einer Außenseite des Flachkanals, bevorzugt auf zumindest einer Breitseite des Flachkanals Elektromagnete und/oder Permanentmagnete, wobei die Elektromagnete und/oder Permanentmagnete bevorzugt eine Kühleinrichtung, besonders bevorzugt eine Luftkühlung oder Wasserkühlung aufweisen.

Dadurch wird trotz hoher Temperatur der Gasreinigungsstrecke eine verbesserte Wirkung der Magnete erreicht. Das führt zu einer höheren magnetischen Feldstärke im Inneren der Gasreinigungsstrecke und damit zu einer verbesserten Partikelabscheidung. Nachfolgend der Gasreinigungstrecke ist eine Abreinigungsvorrichtung angeordnet, umfassend zumindest ein Abreinigungsrohr zur Erzeugung eines Gasstroms, der das abgeschiedene Partikelmaterial aus der Gasreinigungsstrecke entfernt, bevorzugt zusätzlich eine bewegliche Klappe, welche den zu reinigenden Gasstrom, während der Abreinigungszeit vorwiegend durch die Gasreinigungsstrecke leitet. Sauerstoffaufblaskonverter bzw. Elektrolichtbogenöfen werden zyklisch betrieben. Ein solcher Arbeitszyklus weist zwischen den Phasen, während derer der metallurgische Prozess sattfindet und der Messwert der Gasanalyse kontinuierlich benötigt wird, Zeiträume auf, während derer keine Messdaten benötigt werden. Während dieser Zeiträume kann eine Abreinigung des magnetischen Partikelabscheiders erfolgen, indem die Erregung des Magnetfeldes deaktiviert wird und/oder das abgeschiedene Partikelmaterial durch einen künstlich erzeugten Gasstrom aus der Gasreinigungsstrecke entfernt wird. Dabei sorgt eine Verschlussklappe dafür, dass der abzureinigende Gasstrom durch die Gasreingungsstrecke geleitet wird und nicht ungenutzt entweicht. Die Geometrie der Gasentnahmevorrichtung ermöglicht es, dass die Partikel nach Loslösen von der Innenwand der Gasreinigungsstrecke, unterstützt durch Schwerkraft, in die Abgasleitung zurück gefördert werden. Ebenso kann während dieser Zeiträume eine Entmagnetisierung der dem Magnetfeld des magnetischen Partikelabscheiders ausgesetzten Bauteile aus ferromagnetischem Material erfolgen. Nach Beendigung der Abreinigung wird die Erregung des Magnetfeldes wieder aktiviert und die Gasreinigungsstrecke steht für den Prozess wieder zur Verfügung.

Die Reinigungsvorrichtung zur wiederkehrenden Entfernung der magnetisch an der Innenseite des Flachkanals gehaltenen Partikel ist bevorzugt eine Ausblasvorrichtung, kann jedoch auch als Klopfvorrichtung oder mechanischer Abstreifer ausgeführt sein.

Auch kann die Reinigungsvorrichtung durch eine Gaszufuhr über eine Seitenwand eines Strömungskanals im Bereich zwischen der Analysestrecke und der Gasfördereinheit gebildet werden und/oder durch eine Einrichtung zum Umschalten einer Pumprichtung der Gasfördereinheit.

Zum Fördern des zu analysierenden staubbeladenen Gases vom Entnahmerohr bis zum Rückführrohr wird eine Gasfördereinheit verwendet. Dies kann beispielsweise ein Gebläse oder eine Strahlpumpe sein.

Stromaufwärts der Analysestrecke, bezogen auf den Messgasstrom, befindet sich eine Kalibriergasklappe und zumindest eine Kalibriergaseinleitung für die Zufuhr von Kalibriergas, so dass eine Kalibrierung der Analysestrecke in eingebautem Zustand erfolgen kann. Hierfür wird nach Schließen der beweglichen Klappe Gas mit einer bekannten Zusammensetzung in die Analysestrecke eingeleitet. Danach kann die Analysestrecke, welche im Einsatz ein optisches Gasanalysegerät beinhaltet, kalibriert werden.

In einer vorteilhaften Ausführung weist die Gasentnahmevorrichtung zwischen der Kühlstrecke und der Analysestrecke einen Kompensator zum Ausgleich von thermischen Verformungen und/oder Entkopplung von mechanischen Schwingungen auf, wobei dieser beispielsweise als Wellrohr ausgeführt ist.

In einer weiteren vorteilhaften Ausführung der Gasentnahmevorrichtung ist neben der Analysestrecke eine Bypass Leitung angeordnet, wobei die Bypass Leitung in einer Hauptströmungsrichtung des staubbeladenen Gases ausgerichtet ist, wobei die Gasleitung, welche einen Teilstrom eines Analysegases zur Analysestrecke führt, von der Hauptströmungsrichtung abzweigt. Bevorzugt wird der Teilstrom des Analysegases nach der Analysestrecke mittels Rohrleitung wieder der Bypass Leitung zugeführt. Der Winkel unter dem die Gasleitung, welche den Teilstrom eines Analysegases zur Analysestrecke führt, abzweigt, beträgt 10° bis 170° in Bezug auf die Hauptströmungsrichtung. Durch diese Art der Gasführung wird ein Teil der Partikel, welche nicht von der magnetischen Partikelabscheidung erfasst werden, beispielsweise relativ schwere nicht-ferromagnetische Partikel, über die Bypass Leitung geführt und beeinträchtigen somit nicht die Gasanalyse in der Analysestrecke.

In einer weiteren vorteilhaften Ausführung weist die Gasentnahmevorrichtung zwischen der Kühlstrecke und der Gasreinigungsstrecke eine als Gitter mit einer Maschenweite von 0,5 mm bis 3 mm ausgeführte bewegliche Klappe zur Grobabscheidung von Partikelmaterial auf, wobei diese mit einem Aktuator versehen ist und von einer geschlossenen Position in eine offene Abreinigungsposition bewegbar ist.

Die Aufgabe wird weiters gelöst durch eine Gasanalysevorrichtung, wobei die Analysestrecke ein optisches Gasanalysegerät aufweist, wobei die Analysestrecke im Bereich des optischen Gasanalysegeräts aufgeweitet ist, wobei die Aufweitung zumindest 100 mm beträgt, bevorzugt zumindest 200 mm, besonders bevorzugt zumindest 300 mm beträgt. Die erforderliche optische Pfadlänge hängt vom gewünschten Messbereich der Gaskonzentrationen ab.

Dabei erfolgt die Aufweitung im Wesentlichen in nur einer Dimension, um das Volumen der Gasentnahmevorrichtung und damit die Totzeit der Messung gering zu halten.

Nach der Analyse wird das Abgas über ein Rückführrohr, welches in die Abgasleitung mündet, wieder in die Abgasleitung zurückgeführt.

### Kurze Beschreibung der Zeichnungen

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung eines Ausführungsbeispiels, das im Zusammenhang mit den Zeichnungen näher erläutert wird. Dabei zeigen:
Fig. 1 eine Zweiseitenansicht eines Ausführungsbeispiels einer Abgasleitung mit Gasentnahmevorrichtung
Fig. 2 eine Bypass Leitung zur Partikelabscheidung
Fig. 3 eine magnetische Partikelabscheidung

### Beschreibung der Ausführungsformen

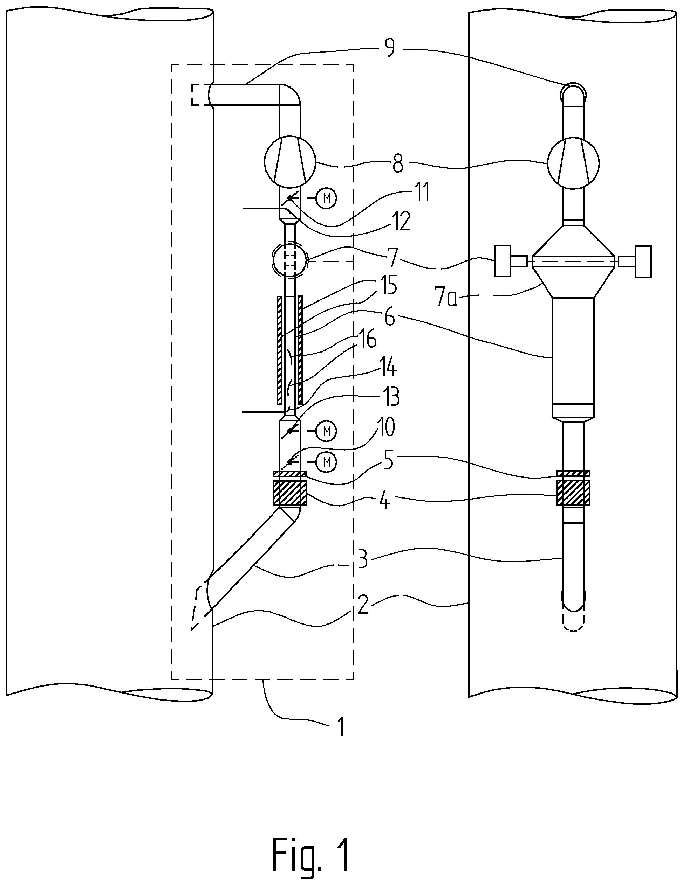

Fig. 1 zeigt ein Ausführungsbeispiel einer Abgasleitung 2 mit der seitlich angeordneten Gasentnahmevorrichtung 1. Die Zweiseitenansicht zeigt die Abgasleitung 2, die Gasentnahmevorrichtung 1, bestehend aus dem Entnahmerohr 3, der Kühlstrecke 4, dem Kompensator 5, der Gasreinigungsstrecke 6 mit Magneten 15, der Analysestrecke 7a mit dem dort integrierten optischen Gasanalysegerät 7, der Gasfördereinheit 8 sowie dem Rückführrohr 9. Darüber hinaus sind eine bewegliche Klappe 10 zur Grobabscheidung von Partikelmaterial, eine weitere bewegliche Klappe 11, ein Abreinigungsrohr 12, eine Kalibriergasklappe 13, sowie eine Kalibriergaseinleitung 14 dargestellt.

Das partikelbeladene, heiße Abgas wird über das Entnahmerohr 3 dem Abgasstrom entnommen und passiert anschließend eine Kühlstrecke 6, einen Kompensator 5 sowie bewegliche Klappe zur Grobabscheidung 10. In der Kühlstrecke 4 wird der Abgasstrom mit dem darin beinhalteten Partikelmaterial so weit abgekühlt, dass das Partikelmaterial größtenteils ferromagnetisch wird. Der Kompensator 5 kann Wärmeausdehnungen der Gasentnahmevorrichtung 1 ausgleichen, bzw. entkoppelt mechanische Schwingungen der Abgasleitung 2. In der nachfolgenden Gasreinigungsstrecke 6 bleibt ferromagnetisches Partikelmaterial, sowie an diesem anhaftendes anderes Partikelmaterial des Gasstroms durch Anlegen von Magnetfeldern weitgehend haften. Dadurch wir die Partikelbeladung des Abgases so weit reduziert, dass das nachfolgend angeordnete optische Gasanalysegerät 7 problemlos Messungen vornehmen kann. Die hierfür nötige Länge des Messpfads von mindestens 100 mm wird durch eine Aufweitung des Strömungskanals in der Analysestrecke 7a erreicht. Dabei sind die Gaskanäle so gestaltet, dass ihr Volumen gering ist und somit auch die Totzeit der Messung geringgehalten werden kann.

Nach Beendigung des metallurgischen Prozesses, kann das Partikelmaterial aus der Gasreinigungsstrecke 6 entfernt werden. Hierfür wird das Magnetfeld abgeschaltet, die bewegliche Klappe zur Grobabscheidung 10 geöffnet, die bewegliche Klappe 11 geschlossen, und Gas über das Abreinigungsrohr 12 zugeführt. Alternativ oder zusätzlich zum Abreinigungsrohr 12 kann auch eine Klopfvorrichtung und/oder ein mechanischer Abstreifer zur Anwendung kommen. Somit löst sich das Partikelmaterial und kann schwerkraftunterstützt zurück in die Abgasleitung ausgebracht werden. Optional kann auch eine Entmagnetisierung der ferromagnetischen Bauteile im Einflussbereich des magnetischen Partikelabscheiders durchgeführt werden.

Typischerweise nach Beendigung des metallurgischen Prozesses kann eine Kalibrierung des optischen Gasanalysegeräts 7 vorgenommen werden. Hierfür wird Klappe 13 geschlossen und über die Kalibriergaseinleitung 14 Kalibriergas in die Analysestrecke eingeleitet, so dass das optische Gasanalysegerät eine entsprechende Kalibrierung durchführen kann.

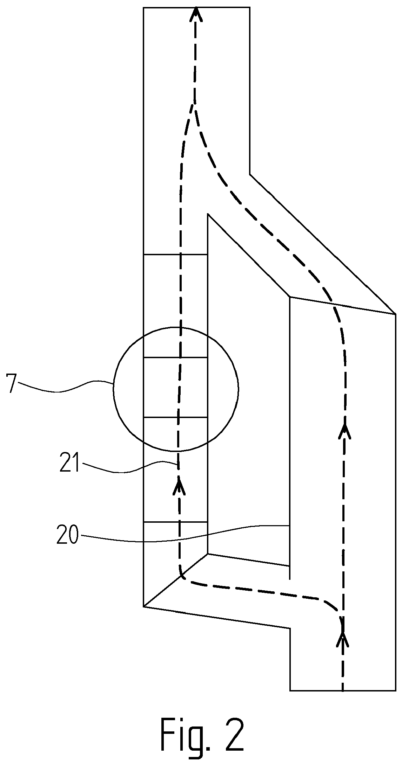

Fig. 2 zeigt eine Bypass Leitung 20, wobei die Bypass Leitung 20 in einer Hauptströmungsrichtung des staubbeladenen Gases ausgerichtet ist, und eine Gasleitung, welche einen Teilstrom 21 eines Analysegases zur Analysestrecke führt, welche von der Hauptströmungsrichtung abzweigt. Der Teilstrom des Analysegases wird nach der Analysestrecke mittels Rohrleitung wieder der Bypass Leitung zugeführt.

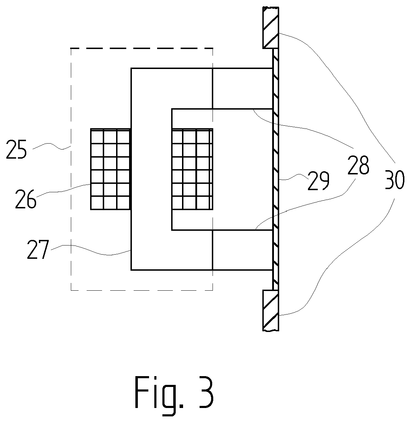

Fig. 3 zeigt eine magnetische Partikelabscheidung, wobei der Magnet 25 als Elektromagnet mit der Wicklung 26 und dem Eisenkern 27 ausgeführt ist, wobei die Kernverlängerung 28 das Magnetfeld an die nicht-ferromagnetische Wand 29 heranführt, die in den restlichen Wandbereich 30 eingesetzt ist.

### Bezugszeichenliste

- 1: Gasentnahmevorrichtung
- 2: Abgasleitung
- 3: Entnahmerohr
- 4: Kühlstrecke
- 5: Kompensator
- 6: Gasreinigungsstrecke
- 7: Optisches Gasanalysegerät
- 7a: Analysestrecke
- 8: Gasfördereinheit
- 9: Rückführrohr
- 10: bewegliche Klappe zur Grobabscheidung
- 11: bewegliche Klappe
- 12: Abreinigungsrohr
- 13: Kalibriergasklappe
- 14: Kalibriergaseinleitung
- 15: Magnete
- 16: Leitschaufeln
- 20: Bypass Leitung
- 21: Teilstrom
- 25: Magnet
- 26: Spule
- 27: Eisenkern
- 28: Eisenkernverlängerung
- 29: nicht-ferromagnetisches Material
- 30: Restlicher Wandbereich

## Patentansprüche

1. Gasentnahmevorrichtung (1) zur Entnahme eines heißen, staubbeladenen Gases aus einer Abgasleitung (2) einer metallurgischen Anlage, insbesondere eines Sauerstoffaufblaskonverters oder eines Elektrolichtbogenofens, wobei das heiße, staubbeladene Gas ferromagnetisches Partikelmaterials aufweist, wobei ein Entnahmerohr (3) derart in der Abgasleitung (2) angeordnet wird, dass ein Teilstrom des Gases entnommen wird, wobei dem Entnahmerohr (3)
- eine Kühlstrecke (4), zur Kühlung des ferromagnetischen Partikelmaterials auf eine Temperatur von unter 750 °C,
- eine Gasreinigungsstrecke (6),
- eine Analysestrecke (7a),
- eine Gasfördereinheit (8) und
- ein Rückführrohr (9) nachgeordnet sind,
**dadurch gekennzeichnet, dass** die Gasreinigungstrecke (6) eine magnetische Partikelabscheidung aufweist, welche durch einen Flachkanal gebildet wird, der einen rechteckigen Querschnitt mit einem Höhen- zu Breitenverhältnis von kleiner als 1:5, bevorzugt kleiner als 1:10 aufweist.

2. Gasentnahmevorrichtung (1) zur Entnahme eines heißen staubbeladenen Gases aus einer Abgasleitung (2) einer metallurgischen Anlage nach Anspruch 1, **dadurch gekennzeichnet, dass** jenes Volumen der Gasentnahmevorrichtung das vom Gas von einschließlich einem Entnahmerohr (3) bis zu einschließlich einem optisches Gasanalysegerät (7) durchströmt wird, weniger als 0,3 m³, bevorzugt weniger als 0,15 m³, besonders bevorzugt weniger als 0,05 m³ beträgt.

3. Gasentnahmevorrichtung (1) zur Entnahme eines heißen staubbeladenen Gases aus einer Abgasleitung (2) einer metallurgischen Anlage nach den vorhergehenden Ansprüchen, **dadurch gekennzeichnet, dass** die Gasreinigungsstrecke (6) zumindest eine Leitschaufel (16) beinhaltet, die so angeordnet ist, dass das staubbeladene Gas in Richtung der magnetischen Partikelabscheidung gelenkt wird.

4. Gasentnahmevorrichtung (1) zur Entnahme eines heißen staubbeladenen Gases aus einer Abgasleitung einer metallurgischen Anlage nach den vorhergehenden Ansprüchen, **dadurch gekennzeichnet, dass** die Gasreinigungsstrecke (6) an jenen Wandbereichen, an denen die magnetischen Partikelabscheidung angeordnet ist, zumindest teilweise nicht-ferromagnetisches Material (29) aufweist und bevorzugt eine geringere Wandstärke aufweist als an den restlichen Wandbereichen (30), besonders bevorzugt soll die geringere Wandstärke einen Wert von 1 - 10 mm, ganz besonders bevorzugt 1 - 5 mm aufweisen.

5. Gasentnahmevorrichtung (1) zur Entnahme eines heißen staubbeladenen Gases aus einer Abgasleitung einer metallurgischen Anlage nach den vorhergehenden Ansprüchen, **dadurch gekennzeichnet, dass** zwischen einer Wand der Gasreinigungsstrecke (6) und der magnetischen Partikelabscheidung Eisenkernverlängerungen (28), welche aus ferromagnetischem Material bestehen, angeordnet sind, die das Magnetfeld an die Gasreinigungsstrecke (6) heranführen.

6. Gasentnahmevorrichtung (1) zur Entnahme eines heißen staubbeladenen Gases aus einer Abgasleitung einer metallurgischen Anlage nach Anspruch 5, **dadurch gekennzeichnet, dass** die Eisenkernverlängerungen (28) eine Kühleinrichtung, bevorzugt eine Luftkühlung oder Wasserkühlung aufweisen.

7. Gasentnahmevorrichtung (1) zur Entnahme eines heißen staubbeladenen Gases aus einer Abgasleitung einer metallurgischen Anlage nach einem der vorhergehenden Ansprüche, **dadurch gekennzeichnet, dass** sich auf zumindest einer Außenseite des Flachkanals, bevorzugt auf zumindest einer Breitseite des Flachkanals Elektromagnete und/oder Permanentmagnete befinden, wobei die Elektromagnete und/oder Permanentmagnete bevorzugt eine Kühleinrichtung, besonders bevorzugt eine Luftkühlung oder Wasserkühlung aufweisen.

8. Gasentnahmevorrichtung (1) nach den vorhergehenden Ansprüchen, **dadurch gekennzeichnet, dass** nachfolgend der Gasreinigungstrecke (6) eine Abreinigungsvorrichtung angeordnet ist, umfassend zumindest ein Abreinigungsrohr (12) zur Erzeugung eines Gasstroms und/oder eine Klopfvorrichtung und/oder einen mechanischen Abstreifer, der das abgeschiedene Partikelmaterial aus der Gasreinigungsstrecke (6) entfernt und/oder eine Gaszufuhr über eine Seitenwand eines Strömungskanals im Bereich zwischen der Analysestrecke und der Gasfördereinheit
und/oder eine Einrichtung zum Umschalten einer Pumprichtung der Gasfördereinheit, bevorzugt zusätzlich eine bewegliche Klappe (11), welche den Gasstrom während der Abreinigungszeit vorwiegend durch die Gasreinigungsstrecke (6) leitet.

9. Gasentnahmevorrichtung (1) nach den vorhergehenden Ansprüchen, wobei die Gasfördereinheit (8) ein Gebläse oder eine Strahlpumpe ist.

10. Gasentnahmevorrichtung (1) nach den vorhergehenden Ansprüchen **dadurch gekennzeichnet, dass** die Analysestrecke (7a) mit einer stromaufwärts befindlichen Kalibriergasklappe (13) und zumindest einer Kalibriergaseinleitung (14) für die Zufuhr von Kalibriergas versehen ist.

11. Gasentnahmevorrichtung (1) nach den vorhergehenden Ansprüchen **dadurch gekennzeichnet, dass** zwischen der Kühlstrecke (4) und der Analysestrecke (7a) ein Kompensator (5) zum Ausgleich von thermischen Verformungen und/oder Entkopplung von Schwingungen, angeordnet ist, wobei dieser beispielsweise als Wellrohr ausgeführt ist.

12. Gasentnahmevorrichtung (1) nach einem der vorhergehen Ansprüche **dadurch gekennzeichnet, dass** neben der Analysestrecke (7a) eine Bypass Leitung (20) angeordnet ist, wobei die Bypass Leitung (20) in einer Hauptströmungsrichtung des staubbeladenen Gases ausgerichtet ist und eine Gasleitung einen Teilstrom (21) eines Analysegases von der Hauptströmungsrichtung abzweigt und zur Analysestrecke (7a) führt und der Teilstrom des Analysegases bevorzugt nach der Analysestrecke (7a) mittels Rohrleitung wieder der Bypass Leitung (20) zugeführt wird.

13. Gasentnahmevorrichtung (1) nach einem der vorhergehen Ansprüche **dadurch gekennzeichnet, dass** zwischen der Kühlstrecke (4) und der Gasreinigungsstrecke (6) eine als Gitter mit einer Maschenweite von 0,5 mm bis 3 mm ausgeführte bewegliche Klappe (10) zur Grobabscheidung von Partikelmaterial angeordnet ist, wobei diese mit einem Aktuator versehen ist und von einer geschlossenen Position in eine offene Abreinigungsposition bewegbar ist.

14. Gasanalysevorrichtung (1) umfassend eine Gasentnahmevorrichtung (1) nach einem der vorhergehenden Ansprüche, **dadurch gekennzeichnet, dass** die Analysestrecke (7a) ein optisches Gasanalysegerät (7) aufweist, wobei die Analysestrecke eine Aufweitung im Bereich des optischen Gasanalysegeräts aufweist, wobei die Aufweitung zumindest 100 mm, bevorzugt zumindest 200 mm, besonders bevorzugt zumindest 300 mm beträgt.

## Claims

1. Gas removal device (1) for removing a hot, dust-laden gas from an offgas conduit (2) of a metallurgical plant, in particular a basic oxygen converter or an electric arc furnace, where the hot, dust-laden gas includes ferromagnetic particulate material, where a removal pipe (3) is arranged in the offgas conduit (2) in such a way that a substream of the gas is removed, wherein the removal pipe (3) is followed downstream by
- a cooling zone (4) for cooling the ferromagnetic particulate material to a temperature below 750°C,
- a gas cleaning zone (6),
- an analysis zone (7a),
- a gas conveying unit (8) and
- a return pipe (9),
**characterized in that** the gas cleaning zone (6) includes a means of magnetic particle precipitation formed by a flat duct having a rectangular cross section having a height to width ratio of less than 1:5, preferably less than 1:10.

2. Gas removal device (1) for removing a hot dust-laden gas from an offgas conduit (2) of a metallurgical plant according to Claim 1, **characterized in that** the volume of the gas removal device through which the gas flows from a removal pipe (3) to an optical gas analyser (7) inclusive is less than 0.3 m³, preferably less than 0.15 m³, more preferably less than 0.05 m³.

3. Gas removal device (1) for removing a hot dust-laden gas from an offgas conduit (2) of a metallurgical plant according to the preceding claims, **characterized in that** the gas cleaning zone (6) includes at least one guide vane (16) arranged in such a way that the dust-laden gas is steered in the direction of the means of magnetic particle precipitation.

4. Gas removal device (1) for removing a hot dust-laden gas from an offgas conduit of a metallurgical plant according to the preceding claims, **characterized in that** the gas cleaning zone (6), in the wall regions of the means of magnetic particle precipitation, includes at least some non-ferromagnetic material (29) and preferably has a lower wall thickness than in the remaining wall regions (30), where the lower wall thickness should more preferably have a value of 1-10 mm, most preferably 1-5 mm.

5. Gas removal device (1) for removing a hot dust-laden gas from an offgas conduit of a metallurgical plant according to the preceding claims, **characterized in that** there are iron core extensions (28) consisting of ferromagnetic material between a wall of the gas cleaning zone (6) and the means of magnetic particle precipitation, which bring the magnetic field up to the gas cleaning zone (6).

6. Gas removal device (1) for removing a hot dust-laden gas from an offgas conduit of a metallurgical plant according to Claim 5, **characterized in that** the iron core extensions (28) have a cooling device, preferably air cooling or water cooling.

7. Gas removal device (1) for removing a hot dust-laden gas from an offgas conduit of a metallurgical plant according to any of the preceding claims, **characterized in that** there are electromagnets and/or permanent magnets on at least one outer face of the flat duct, preferably on at least one broad side of the flat duct, where the electromagnets and/or permanent magnets preferably have a cooling device, more preferably air cooling or water cooling.

8. Gas removal device (1) according to the preceding claims, **characterized in that** downstream of the gas cleaning zone (6) is disposed a cleaning device comprising at least one decontamination pipe (12) for generating a gas flow and/or a tapper device and/or a mechanical scraper that removes the precipitated particulate material from the gas cleaning zone (6) and/or a gas supply via a side wall of a flow duct in the region between the analysis zone and the gas conveying unit
and/or a device for switching a pumping direction of the gas conveying unit, and preferably additionally a movable flap (11) which directs the gas flow predominantly through the gas cleaning zone (6) during the decontamination period.

9. Gas removal device (1) according to the preceding claims, wherein the gas conveying unit (8) is a blower or a jet pump.

10. Gas removal device (1) according to the preceding claims, **characterized in that** the analysis zone (7a) is provided with an upstream calibration gas flap (13) and at least one calibration gas inlet (14) for the supply of calibration gas.

11. Gas removal device (1) according to the preceding claims, **characterized in that** a compensator (5) for compensating for thermal deformation and/or decoupling vibrations is disposed between the cooling zone (4) and the analysis zone (7a) and is designed, for example, as a corrugated tube.

12. Gas removal device (1) according to any of the preceding claims, **characterized in that** a bypass conduit (20) is disposed alongside the analysis zone (7a), where the bypass conduit (20) is aligned in a main flow direction of the dust-laden gas and a gas conduit diverts a substream (21) of an analysis gas from the main flow direction and leads to the analysis zone (7a) and the substream of the analysis gas is preferably fed back to the bypass conduit (20) downstream of the analysis zone (7a) by pipeline.

13. Gas removal device (1) according to any of the preceding claims, **characterized in that** a movable flap (10) for coarse precipitation of particulate material between the cooling zone (4) and the gas cleaning zone (6) takes form of a grid with a mesh size of 0.5 mm to 3 mm and is provided with an actuator and is movable from a closed position to an open decontamination position.

14. Gas analysis device (1) comprising a gas removal device (1) according to any of the preceding claims, **characterized in that** the analysis zone (7a) includes an optical gas analyser (7), where the analysis zone has an extent in the region of the optical gas analyser, where the extent is at least 100 mm, preferably at least 200 mm, more preferably at least 300 mm.

## Revendications

1. Dispositif de prélèvement de gaz (1) destiné au prélèvement d'un gaz chaud chargé de poussière à partir d'une conduite de gaz d'échappement (2) d'une installation métallurgique, en particulier d'un convertisseur à gonflage à l'oxygène ou d'un four à arc électrique, dans lequel le gaz chaud chargé de poussière présente une matière particulaire ferromagnétique, dans lequel un tuyau de prélèvement (3) est disposé dans la conduite de gaz d'échappement (2) de telle sorte qu'une partie de courant du gaz est prélevée, dans lequel
- une section de refroidissement (4) destinée au refroidissement de la matière particulaire ferromagnétique jusqu'à une température inférieure à 750 °C,
- une section d'épuration de gaz (6),
- une section d'analyse (7a),
- une unité de transport de gaz (8) et
- un tuyau de retour (9) sont arrangés en aval du tuyau de prélèvement (3),
**caractérisé en ce que** la section d'épuration de gaz (6) présente une séparation de particules magnétiques qui est formée par le biais d'un canal plat qui présente une section transversale rectangulaire avec un rapport de la hauteur sur la largeur inférieur à 1/5, de préférence inférieur à 1/10.

2. Dispositif de prélèvement de gaz (1) destiné au prélèvement d'un gaz chaud chargé de poussière à partir d'une conduite de gaz d'échappement (2) d'une installation métallurgique selon la revendication 1, **caractérisé en ce que** le volume du dispositif de prélèvement de gaz qui est traversé par le gaz, depuis un tuyau de prélèvement (3) inclus jusqu'à un appareil d'analyse de gaz optique (7) inclus, représente moins de 0,3 m³, de préférence moins de 0,15 m³, plus préférablement moins de 0,05 m³.

3. Dispositif de prélèvement de gaz (1) destiné au prélèvement d'un gaz chaud chargé de poussière à partir d'une conduite de gaz d'échappement (2) d'une installation métallurgique selon les revendications précédentes, **caractérisé en ce que** la section d'épuration de gaz (6) contient au moins une aube directrice (16) qui est disposée de sorte que le gaz chargé de poussière est dirigé dans la direction de la séparation de particules magnétiques.

4. Dispositif de prélèvement de gaz (1) destiné au prélèvement d'un gaz chaud chargé de poussière à partir d'une conduite de gaz d'échappement d'une installation métallurgique selon les revendications précédentes, **caractérisé en ce que** la section d'épuration de gaz (6) présente au niveau des sections de paroi au niveau desquelles la séparation de particules magnétiques est disposée au moins un matériau partiellement non-ferromagnétique (29) et présente de préférence une épaisseur de paroi plus faible qu'au niveau des sections de paroi restantes (30), plus préférablement l'épaisseur de paroi plus faible doit présenter une valeur de 1 à 10 mm, de manière préférée entre toutes de 1 à 5 mm.

5. Dispositif de prélèvement de gaz (1) destiné au prélèvement d'un gaz chaud chargé de poussière à partir d'une conduite de gaz d'échappement d'une installation métallurgique selon les revendications précédentes, **caractérisé en ce que**, entre une paroi de la section d'épuration de gaz (6) et la séparation de particules magnétiques sont disposées des rallonges à noyau en fer (28), qui sont composées de matériau ferromagnétique, qui amènent le champ magnétique vers la section d'épuration de gaz (6).

6. Dispositif de prélèvement de gaz (1) destiné au prélèvement d'un gaz chaud chargé de poussière à partir d'une conduite de gaz d'échappement d'une installation métallurgique selon la revendication 5, **caractérisé en ce que** les rallonges à noyau en fer (28) présentent une installation de refroidissement, de préférence un refroidissement par air ou un refroidissement par eau.

7. Dispositif de prélèvement de gaz (1) destiné au prélèvement d'un gaz chaud chargé de poussière à partir d'une conduite de gaz d'échappement d'une installation métallurgique selon l'une quelconque des revendications précédentes, **caractérisé en ce que** des électroaimants et/ou des aimants permanents se trouvent sur au moins une face externe du canal plat, de préférence sur au moins une face large du canal plat, dans lequel les électroaimants et/ou les aimants permanents présentent de préférence une installation de refroidissement, plus préférablement un refroidissement par air ou un refroidissement par eau.

8. Dispositif de prélèvement de gaz (1) selon les revendications précédentes, **caractérisé en ce que**, à la suite de la section d'épuration de gaz (6), est disposé un dispositif d'épuration comprenant au moins un tuyau de nettoyage (12) destiné à la génération d'un courant de gaz et/ou un dispositif de battage et/ou un racloir mécanique qui éloigne la matière particulaire séparée de la section d'épuration de gaz (6) et/ou dirige une amenée de gaz par le biais d'une paroi latérale d'un canal d'écoulement dans la zone entre la section d'analyse et l'unité de transport de gaz et/ou un équipement destiné à la modification d'une direction de pompe de l'unité de transport de gaz, de préférence en plus un clapet mobile (11) qui dirige le courant de gaz pendant le temps de nettoyage principalement à travers la section d'épuration de gaz (6).

9. Dispositif de prélèvement de gaz (1) selon les revendications précédentes, dans lequel l'unité de transport de gaz (8) est un ventilateur ou une pompe à jet.

10. Dispositif de prélèvement de gaz (1) selon les revendications précédentes, **caractérisé en ce que** la section d'analyse (7a) est munie d'un clapet de gaz d'étalonnage (13) qui se trouve en amont et au moins d'une introduction de gaz d'étalonnage (14) pour l'apport de gaz d'étalonnage.

11. Dispositif de prélèvement de gaz (1) selon les revendications précédentes, **caractérisé en ce que**, entre la section de refroidissement (4) et la section d'analyse (7a) est disposé un compensateur (5) destiné à la compensation de déformations thermiques et/ou au découplage d'oscillations, dans lequel celui-ci est réalisé par exemple en tant que tuyau ondulé.

12. Dispositif de prélèvement de gaz (1) selon l'une quelconque des revendications précédentes, **caractérisé en ce que**, à côté de la section d'analyse (7a), une conduite de dérivation (20) est disposée, dans lequel la conduite de dérivation (20) est orientée dans une direction d'écoulement principale du gaz chargé de poussière et une conduite de gaz dérive une partie de courant (21) d'un gaz d'analyse de la direction d'écoulement principale et amène à la section d'analyse (7a) et la partie de courant du gaz d'analyse est ramenée de préférence après la section d'analyse (7a) à la conduite de dérivation (20) au moyen d'une conduite tubulaire.

13. Dispositif de prélèvement de gaz (1) selon l'une quelconque des revendications précédentes, **caractérisé en ce qu'**un clapet mobile (10) réalisé en tant que grille avec une largeur de maille de 0,5 mm à 3 mm destiné à la séparation grossière de matériau particulaire est disposé entre la section de refroidissement (4) et la section d'épuration de gaz (6), dans lequel celui-ci est muni d'un actionneur et est mobile d'une position fermée jusque dans une position de nettoyage ouverte.

14. Dispositif d'analyse de gaz (1) comprenant un dispositif de prélèvement de gaz (1) selon l'une quelconque des revendications précédentes, **caractérisé en ce que** la section d'analyse (7a) présente un appareil d'analyse de gaz optique (7), dans lequel la section d'analyse présente un élargissement dans la zone de l'appareil d'analyse de gaz optique, dans lequel l'élargissement représente au moins 100 mm, de préférence au moins 200 mm, plus préférablement au moins 300 mm.
